# EUROPÄISCHE PATENTSCHRIFT

(11) **EP 0 968 373 B1**
(45) Veröffentlichungstag und Bekanntmachung des Hinweises auf die Patenterteilung: **18.02.2004**
(21) Anmeldenummer: 98907796.1
(22) Anmeldetag: 19.03.1998
(51) Int. Cl.: F16B 13/00

(54) **VERFAHREN ZUR VERANKERUNG VON VERBINDUNGSELEMENTEN IN EINEM MATERIAL MIT POREN ODER HOHLRÄUMEN SOWIE VERBINDUNGSELEMENTE FÜR DIE VERANKERUNG**
PROCESS FOR ANCHORING CONNECTING ELEMENTS IN A MATERIAL WITH PORES OR CAVITIES AND CONNECTING ELEMENTS THEREFOR
PROCEDE POUR ANCRER DES ELEMENTS DE LIAISON DANS UN MATERIAU COMPORTANT DES PORES OU DES CAVITES, ET ELEMENTS DE LIAISON POUR LEDIT ANCRAGE

(30) Priorität: 21.03.1997 CH 67997
(43) Veröffentlichungstag der Anmeldung: 05.01.2000
(73) Patentinhaber: Woodwelding AG, 8002 Zürich (CH)
(72) Erfinder: AESCHLIMANN, Marcel, CH-2502 Biel (CH); MOCK, Elmar, CH-2504 Biel (CH); TORRIANI, Laurent, CH-2502 Biel (CH); KÖSTER, Heinz, D-83071 Stefanskirchen (DE)
(74) Vertreter: Frei, Alexandra Sarah
(86) Internationale Anmeldenummer: PCT/CH1998/000109
(87) Internationale Veröffentlichungsnummer: WO 1998/042988

(56) Entgegenhaltungen:
- EP-A- 0 415 615
- WO-A-96/01377
- FR-A- 1 164 445
- FR-A- 2 455 502
- GB-A- 762 906
- GB-A- 2 061 183
- US-A- 3 612 803
- PATENT ABSTRACTS OF JAPAN vol. 017, no. 709 (M-1535), 24.Dezember 1993 -& JP 05 245941 A (YOKOHAMA RUBBER CO LTD:THE), 24.September 1993,
- ROBINSON I: "LINEAR VIBRATION WELDING OF NON METALLIC COMPONENTS" WELDING AND METAL FABRICATION, Bd. 57, Nr. 4, Mai 1989, Seiten 152-154, XP000036724
- PATENT ABSTRACTS OF JAPAN vol. 004, no. 171 (M-044), 26.November 1980 -& JP 55 121024 A (TOYOTA MOTOR CORP), 17.September 1980,

## Beschreibung

Die Erfindung betrifft ein Verfahren gemäss dem Oberbegriff des ersten unabhängigen Patentanspruchs. Das Verfahren dient zur Verankerung von Verbindungselementen in einem Material mit Poren oder Hohlräumen, insbesondere in Holz oder holzähnlichen Materialien (z.B. Spanplatten). Ferner betrifft die Erfindung Verbindungselemente zur Anwendung in dem Verfahren. Die nach dem erfindungsgemässen Verfahren verankerten Verbindungselemente dienen insbesondere der Herstellung von aus verschiedenen Teilen bestehenden Konstrukten oder zur Befestigung von Beschlägen.

Gemäss dem Stande der Technik werden Teile aus Holz oder aus holzähnlichen Materialien beispielsweise mit Verbindungselementen in Form von Nägeln und Schrauben miteinander verbunden, indem diese durch den einen der zu verbindenden Teile in den anderen zu verbindenden Teil getrieben werden. Schrauben und Nägel bestehen in den meisten Fällen aus Metall. Sie weisen im Bereiche der Oberfläche des einen der zu verbindenden Teile einen Kopf auf und sind mindestens in einem anderen der zu verbindenden Teile reib- oder formschlüssig verankert. Diese stiftförmigen Verbindungselemente stellen in Holzkonstruktionen metallene. vielfach korrosionsanfällige Fremdkörper dar, die für eine Bearbeitung nach dem Verbinden der Teile hinderlich sein können und die in den fertigen Konstruktionen Brücken für Wärmetransporte darstellen.

Es ist ebenfalls bekannt, Teile aus faserigen Materialien, zu denen Holz und holzähnliche Materialien gehören, mit Teilen aus thermoplastischen Kunststoffen zu verbinden, indem der thermoplastische Kunststoff mindestens an seiner dem Teil aus faserigem Material zugewandten Oberfläche plastifiziert wird und die beiden Oberflächen aufeinander gepresst werden. Der Kunststoff wird dazu in einer plastifizierten Form auf die Oberfläche des faserigen Materials aufgebracht oder er wird in der definitiven Position durch beispielsweise Ultraschall-Anregung plastifiziert. Bei allen diesen Verfahren entsteht an der Grenzschicht zwischen Kunststoff und faserigem Material eine Verbindung im Sinne eines mikroskopischen Formschlusses dadurch, dass das plastifizierte Kunststoffmaterial in Oberflächenunebenheiten des faserigen Materials hineingepresst wird. Derartige Methoden sind beispielsweise beschrieben in den Publikationen FR-2455502, FR-1495999, DE-3828340 oder EP-0269476. Gemäss WO-96/01377 kann der Kunststoffteil auch ein Dübel sein, der zwei Teile aus Holz miteinander verbindet. Auf demselben Prinzip beruhen bekannte Methoden zum Verbinden von Teilen aus Holz oder holzähnlichen Materialien, bei denen zwischen die zu verbindenden Teile eine Schicht aus einem thermoplastischen Kunststoff, beispielsweise eine Lackschicht gebracht wird und die Teile dann zusammengepresst und mit Ultraschall beaufschlagt werden (JP-52127937, WO-96/01377).

In allen den oben genannten Verfahren werden Kunststoff und faseriges Material miteinander verbunden durch eine durch mikroskopischen Formschluss bedingte Oberflächenadhäsion, wie sie in gleicher Weise auch bei üblichen Kleheverfahren auftritt. Die genannten Verfahren haben denn auch verschiedene gleiche Nachteile wie Klebeverfahren, insbesondere ihre Empfindlichkeit gegenüber thermischen Belastungen und Belastungen durch Feuchtigkeit, bei denen die beiden miteinander verbundenen Oberflächen sich verschieden stark ausdehnen und erhebliche Scherkräfte entstehen, die die Verbindung zu schwächen oder gar zu zerstören vermögen.

Die Erfindung stellt sich nun die Aufgabe, ein Verfahren aufzuzeigen zum Verankern von Verbindungselementen, z.B. von Verbindungsstiften, in Teilen aus einem Material, das Poren oder Hohlräume aufweist, insbesondere in Teilen aus Holz oder aus holzähnlichen Materialien, wobei das Verfahren auf den oben genannten Verfahren zur Verbindung von Kunststoff und Holzteilen basiert, dessen Nachteile aber mindestens mindert, das heisst, insbesondere Verankerungen liefert, die unter thermischer Belastungen und/oder Belastung durch Feuchtigkeit stabiler sind. Das Verfahren soll einfach sein und trotzdem spezifisch an Verbindungslemente mit verschiedenen Funktionen und an verschiedene Materialtypen angepasst werden können. Ferner soll das Verfahren mit bekannten Mitteln und Werkzeugen und mit wenig Aufwand durchführbar sein.

Diese Aufgabe wird gelöst durch das Verfahren, wie es in den Patentansprüchen definiert ist.

Gemäss dem erfindungsgemässen Verfahren wird für eine Verankerung plastifizierter Kunststoff nicht wie in den bekannten Verfahren nur in Oberflächenunebenheiten eingepresst, sondern in Poren oder Hohlräume im Inneren des Teils, in dem das Verbindungselement zu verankern ist, sodass sich eine makroskopische Verankerung bildet. Diese makroskopische Verankerung beruht auf dem Eindringen des plastifizierten Kunststoffes in mikroskopische Poren des Materials und auf der Bildung einer Art von Komposit bestehend aus dem ursprünglich porösen Material und dem darin eingedrungenen Kunststoff oder auf einem makroskopischen Formschluss, der dadurch entsteht, dass der plastifizierte Kunststoff in makroskopische Hohlräume gepresst wird.

Nach dem erfindungsgemässen Verfahren wird in dem Teil, in dem das Verbindungselement zu verankern ist, eine Öffnung mit geschlossenem Ende, beispielsweise eine Bohrung (Sackloch) erstellt. In dieser Bohrung wird das Verbindungselement, das ganz oder teilweise aus einem thermoplastischen Kunststoff besteht, positioniert.

Die Bohrung und das Verbindungselement. sind in ihrer Form derart aufeinander abgestimmt, dass das Verbindungselement ohne Kraftaufwand bis zu einer ersten Position in die Bohrung einführbar ist und dass, wenn es mit Hilfe einer Presskraft parallel zur Bohrungsachse von dieser ersten Position weiter gegen das geschlossene Ende der Bohrung in eine zweite, definitive Position getrieben wird, sich an mindestens einer vorbestimmten Verankerungsstelle zwischen Verbindungselement und Bohrungswand Druck aufbaut, während an anderen Stellen kein Druck entsteht.

Gleichzeitig mit dem Einpressen des Verbindungselementes von seiner ersten in seine zweite Position in der Bohrung oder unmittelbar vorher wird dem Verbindungselement Energie zugeführt, derart, dass das Kunststoffmaterial an den oben genannten, vorgegebenen Verankerungsstellen, an denen der Druck sich konzentriert, örtlich plastifiziert wird. Eine derartig gezielte, örtliche Plastifizierung kann beispielsweise erreicht werden,
- indem das Verbindungselement ganz aus einem thermoplastischen Kunststoff besteht oder mindestens im Bereiche der vorbestimmten Verankerungsstellen mindestens Oberflächenbereiche aus einem thermoplastischen Kunststoff aufweist und indem ein solches Verbindungselement zur Zuführung von Energie mit Ultraschall oder einer anderen geeigneten Vibration beaufschlagt wird, wodurch an den Stellen der Druckkonzentration (vorbestimmte Verankerungsstellen) die grösste Reibung und dadurch die grösste Wärme erzeugt und dadurch der thermoplastische Kunststoff lokal plastifiziert wird (verwandt mit Verbindungstechniken wie Ultraschallschweissen, Reibschweissen, Vibrationsschweissen, Orbitalschweissen);
- indem das Verbindungselement im Bereiche der vorbestimmten Verankerungsstellen mindestens Oberflächenbereiche aus einem thermoplastischen Kunststoffmaterial aufweist, das bei einer tieferen Temperatur plastifizierbar ist als die übrigen Materialien des Verbindungselementes, und indem ein solches Verbindungselement durch Wärmezufuhr erhitzt wird;
- indem das Verbindungselement im Bereiche der vorbestimmten Verankerungsstellen mindestens Oberflächenbereiche aus einem thermoplastischen Kunststoffmaterial aufweist, in das Metallpartikel eingelagert sind, und indem ein solches Verbindungselement induktiv erhitzt wird.

Das Verbindungselement weist auf seiner inneren Seite, die in der geschlossenen Bohrung gegen das geschlossene Ende der Bohrung gerichtet ist, mindestens eine erste vorbestimmte Verankerungsstelle auf. Ferner weist das Verbindungselement auf seiner entgegengesetzten, äusseren Seite, also auf der aus der Bohrung vorstehenden oder in der Bohrungsöffnung positionierten Seite eine als Kopf dienende Verdickung oder ein Mittel zur Befestigung eines weiteren Teiles auf oder es weist eine gegen die äussere Seite von der ersten Verankerungsstelle beabstandete, weitere Verankerungsstelle auf. Es sind auch insbesondere stiftförmige Verbindungselemente mit mehreren vorbestimmten Verankerungsstellen denkbar.

Während das Verbindungselement in die zweite, definitive Position in der Bohrung gepresst und ihm gleichzeitig Energie zugeführt wird, wird an den vorgegebenen Verankerungsstellen, an denen ein hoher Druck zwischen Verbindungselement und Bohrungswand entsteht, das Material des Verbindungselementes plastifiziert und durch den Druck an diesen Stellen in die Bohrungswand bzw. in Poren oder Hohlräume im Material, das an die Bohrung grenzt, gepresst, während es an anderen Stellen unverändert bleibt.

Damit das plastifizierte Kunststoffmaterial durch den an den Verankerungsstellen erzeugten Druck in die Bohrungswand gepresst wird, muss diese eine Porosität oder Öffnungen zu Hohlräumen aufweisen oder die Bohrungswand muss derart beschaffen sein, dass durch den entstehenden Druck Poren oder Hohlräume, in die das plastifizierte Material gepresst werden kann, erzeugt werden. Poröse Materialien, die sich für Verankerungen nach dem erfindungsgemässen Verfahren eignen sind insbesondere Holz oder holzähnliche Materialien, aber auch Sandsteine, keramische Materialien, Backsteine oder Beton etc. Hohlräume, die sich für die Erstellung von erfindungsgemässen Verankerungen eignen, öffnen sich im wesentlichen quer zur Bohrungsachse und finden sich insbesondere in Leichtbauelementen.

Die erreichbare Tiefe der Verankerung eines Kunststoffes in einem porösen Material ist abhängig von dessen Struktur (für Holz beispielsweise von der Dichte der Holzfasern), aber auch vom angewendeten Druck und von der örtlich zur Verfügung stehenden Menge an plastifiziertem Kunststoff. Wie noch zu zeigen sein wird, sind beispielsweise in Massivholz Verankerungstiefen von 1 bis 4cm ohne weiteres erreichbar.

Die wünschbare Tiefe der Verankerung des Kunststoffes in einem porösen Material ist abhängig von der Belastbarkeit des Materials und kann über die Menge einzupressenden Materials und/oder über die Stärke der angewendeten Presskraft gesteuert werden. Die Form der Verankerung kann weitgehend gesteuert werden durch entsprechende Abstimmung der Form der Bohrung und der Form des Verbindungselementes. Dadurch können mit dem erfindungsgemässen Verfahren Verankerungen erstellt werden, die ganz spezifisch angepasst sind an den Charakter des Materials (z.B. Holzart, Ausrichtung von Maserung oder Dichtegradient relativ zur Ausrichtung der Bohrung etc.), in dem die Verankerung erstellt werden soll, und an die Funktion und Belastung, die das Verbindungselement aufzunehmen hat.

Die für eine spezifische Anwendung vorteilhaftesten Formen von Bohrung und Verbindungselement sowie die Höhe der Presskraft und die Menge der dem Verbindungselement zuzuführenden Energie sind in jedem spezifischen Falle experimentell festzulegen.

Das erfindungsgemässe Verfahren zur Verankerung von Verbindungselementen in einem Teil aus einem porösen Material, insbesondere aus Holz oder aus einem holzähnlichen Material, oder aus einem Material mit geeigneten Hohlräumen und verschiedene Arten von Verbindungselementen werden anhand der folgenden Figuren mehr im Detail beschrieben. Dabei zeigen:
- **Figur 1**: eine beispielhafte Verfahrensvariante zur Verankerung eines Verbindungsstiftes mit Kopf in einem Holzteil zur Verbindung von zwei Holzteilen;
- **Figur 2**: eine weitere beispielhafte Verfahrensvariante zur Verankerung eines Verbindungsstiftes in zwei zu verbindenden Holzteilen;
- **Figuren 3 bis 5**: drei beispielhafte Ausführungsformen der Verankerungsstelle im Bereiche des geschlossenen Bohrungsendes;
- **Figur 6**: ein Beispiel eines Beschlages, der mit Hilfe einer Mehrzahl von in einem hölzernen Teil verankerten Verbindungsstiften an diesem Teil befestigt ist;
- **Figur 7**: eine weitere, beispielhafte Verfahrensvariante zur Verankerung eines Verbindungselementes, das zur Befestigung weiterer Teile ein Innengewinde aufweist;
- **Figur 8**: ein Beispiel einer erfindungsgemässen Verankerung in einem Leichtbauelement mit Hohlräumen.

In allen Figuren sind Verbindungselemente, Bohrungen und Verankerungen im Schnitt entlang der Bohrungsachse dargestellt.

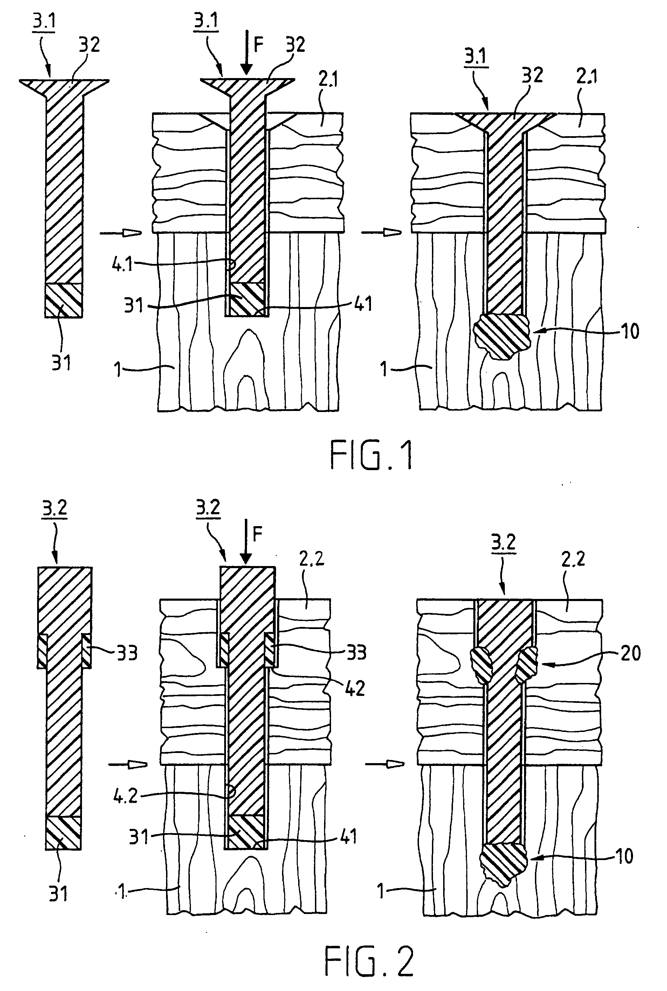

**Figur 1** zeigt als erste, beispielhafte Variante des erfindungsgemässen Verfahrens eine Verankerung eines stiftförmigen Verbindungselementes mit Kopf (Verhindungsstift 3.1) in einem ersten hölzernen Teil 1 zur Verbindung dieses ersten Teiles 1 mit einem zweiten Teil 2.1, der beispielsweise ebenfalls aus Holz besteht.

Der Verbindungsstift 3.1 weist im Bereich seines inneren Endes eine vorbestimmte erste Verankerungsstelle 31 auf, an seinem äusseren Ende einen Kopf 32. Die Bohrung 4.1, die durch den Teil 2.1 ganz durchgeht und im Teil 1 ein geschlossenes Ende 41 aufweist, ist weniger tief, als der Verbindungsstift 3.1 lang ist, und weist an ihrem offenen Ende beispielsweise eine erweiterte Vertiefung für eine Versenkung des Kopfes 32 auf. Der Querschnitt der Bohrung 4.1 ist derart auf den Querschnitt des Verbindungsstiftes 3.1 abgestimmt, dass der Stift ohne Kraftaufwand bis zum geschlossenen Ende 41 der Bohrung in diese einführbar ist. Dies ist die erste Position des Verbindungsstiftes 3.1 in der Bohrung 4.1.

Von der ersten Position wird der Verbindungsstift 3.1 mit einer Presskraft F, die im wesentlichen parallel zur Bohrungsachse ausgerichtet ist, weiter in die Bohrung 4.1 gepresst. Die einzige Stelle, an der durch die Presskraft F zwischen dem Verbindungsstift 3.1 und der Wandung der Bohrung 4.1 ein Druck entsteht, ist der Bereich des geschlossenen Bohrungsendes 41. Wird nun in der bereits beschriebenen Weise durch Zuführung von Energie zum Verbindungsstift dafür gesorgt, dass während dem Einpressen nur an dieser Stelle das Material des Verbindungsstiftes plastifiziert wird, wird nur an dieser Stelle eine Verankerung 10 des Verbindungsstiftes im zu verbindenden Teil 1 entstehen.

Diese Verankerung 10 ist in der Figur als Kunststoffbereich dargestellt, besteht aber tatsächlich aus einem innigen Gemisch von Holzfasern und Kunststoff, das einem Komposit-Material gleicht, und kann beispielsweise in Fichtenholz, dessen Maserung parallel zur Bohrungsachse ausgerichtet ist, eine Tiefe bis zu 2cm aufweisen.

Die Länge des Verbindungsstiftes 3.1, die Tiefe der Bohrung 4.1, die Kraft F und die Menge der zuzuführenden Energie sind derart aufeinander abzustimmen, dass die Verankerung die gewünschten Festigkeitsbedingungen erfüllt und dass die beiden Teile zwischen dem Kopf 32 des Verbindungsstiftes und der Verankerung 10 fest zusammengespannt sind.

Der Verbindungsstift 3.1 der Figur 1 wird im Teil 1 durch die Verankerungsstelle 10 verankert, was nur in einem Teil aus einem porösen Material, insbesondere aus Holz oder aus einem holzähnlichen Material möglich ist, oder, wenn das Material der Bohrungswand im Bereiche der Verankerungsstelle geeignete Hohlräume aufweist oder durch den auf den Verbindungsstift ausgeübten Druck in der Bohrungswand derartige Öffnungen erzeugt werden.

Der Teil 2.1 kann wie dargestellt ebenfalls aus Holz aber auch aus einem anderen, nicht porösen Material (Metall, Kunststoff) bestehen. Der Kopf 32 kann, wie dies in der Figur 1 dargestellt ist, ein Bestandteil des Verbindungsstiftes sein. Der Kopf kann aber auch nach der Erstellung der Verankerung auf den Verbindungsstift aufgesetzt werden, beispielsweise in ein im Verbindungsstift vorgesehenes Gewinde eingeschraubt werden. Der Kopf 32 kann irgend eine Form haben, beispielsweise auch ein Beschlag mit einer spezifischen Funktion darstellen.

Ein Vorteil einer Verbindung von zwei Teilen, wie sie in der Figur 1 dargestellt ist, gegenüber anderen Verbindungsverfahren, in denen plastifizierte Kunststoffe als Verbindungsmaterialien zur Anwendung kommen, besteht darin, dass in jedem Falle verhindert werden kann, dass plastifiziertes Material in die Fuge zwischen den zu verbindenden Teilen 1 und 2.1 gepresst wird und diese dadurch voneinander gedrückt werden. Dies wird verhindert, dadurch, dass im Bereiche einer solchen Fuge kein Druck aufgebaut wird und das Material des Verhindungsstiftes in diesem Bereiche nicht plastifiziert wird.

Wird die dem Verbindungsstift zuzuführende Energie in Form von Ultraschallwellen zugeführt, muss der Verbindungsstift 3.1 wie dargestellt im Bereich seines auf dem geschlossenen Bohrungsende 41 zu positionierenden, inneren Endes aus einem thermoplastischen Kunststoffmaterial bestehen. Der Rest des Stiftes kann aus demselben Material oder aus einem anderen Material bestehen.

Wird die dem Verbindungsstift 3.1 zuzuführende Energie in Form von Wärme zugeführt, besteht er im Bereiche der Verankerungsstelle aus einem Kunststoffmaterial, das bei einer tieferen Temperatur plastifizierbar ist als das Material, aus dem der Verbindungsstift in anderen Bereichen besteht.- Es ist in einem derartigen Fall auch denkbar, dass der Verbindungsstift eine "Seele" aus einem wärmeleitenden Material, beispielsweise aus Metall besitzt, über welche Seele die dem Verbindungsstift zuzuführende Wärme gegen die Verankerungsstelle leitbar ist.

Wird die dem Verbindungsstift zuzuführende Energie induktiv zugeführt, enthält das thermoplastische Material der vorbestimmten Verankerungsstelle 31 eingelagerte Metallteilchen.

**Figur 2** zeigt als weitere, beispielhafte Variante des erfindungsgemässen Verfahrens eine Verankerung eines stiftförmigen Verbindungselementes (Verbindungsstift 3.2) in zwei miteinander zu verbindenden, beispielsweise hölzernen Teilen 1 und 2.2, wobei der Verbindungsstift 3.2 in beiden Teilen 1 und 2.2 verankert wird (Verankerungen 10 und 20).

Der Verbindungsstift 3.2 weist wie der Verbindungsstift 3.1 der Figur 1 eine vorbestimmte, erste Verankerungsstelle 31 an seinem in die Bohrung einzusteckenden, inneren Ende auf. Ferner weist er eine vorbestimmte, zweite Verankerungsstelle 33 auf, die die Form einer stufenartigen Querschnittsverringerung aufweist und am Stift dort angeordnet ist, wo er im zweiten zu verbindenden Teil 2.2 positioniert sein wird.

Die Bohrung 4.2 weist eine der Querschnittsverengung am Verbindungsstift 3.2 entsprechende Querschnittsverengung 42 auf, auf der der Verbindungsstift in seiner ersten Position aufsitzt. Wird der Verbindungsstift 3.2 durch die Presskraft F tiefer in die Bohrung 4.2 gepresst, baut sich nicht nur im Bereiche des geschlossenen Endes 41 der Bohrung 4.2 sondern auch im Bereiche der Querschnittsverengung 42 Druck auf, durch den an dieser Stelle plastifiziertes Kunststoffmaterial in die Wandung der Bohrung 4.2 eingepresst wird und sich dadurch eine zweite Verankerung 20 bildet.

Die Bohrungen 4.1 und 4.2 der Figuren 1 und 2 haben vorteilhafterweise einen runden Querschnitt. Die Verbindungsstifte 3.1 und 3.2 können ebenfalls rund sein. Sie können aber auch einen anderen, in die entsprechende Bohrung passenden Querschnitt aufweisen. Beispielsweise kann der Verbindungsstift 3.2 im Bereiche seines kleineren Querschnittes rund sein und im Bereiche seines grösseren Querschnittes einen eckigen Querschnitt (z.B. quadratisch) aufweisen, wobei nur die Bereiche der Kanten auf der Stufe 42 aufsitzen.

In den beiden Figuren 1 und 2 ist das geschlossene Ende 41 der Bohrung flach dargestellt und sitzt der Verbindungsstift in seiner ersten Position mit einer flachen Stirnfläche in der Bohrung auf. Mit einer derartigen Formgebung von Bohrung und Verbindungsstift baut sich beim Einpressen des Stiftes über die ganze Stirnfläche ein im wesentlichen gleichförmiger Druck auf. Das plastifizierte Material wird hauptsächlich parallel zur Längsachse des Verbindungsstiftes in das Holz getrieben, sodass der Querschnitt der Verankerung 10 nur wenig grösser ist als der Querschnitt des Verbindungsstiftes.

Eine derartige Ausbildung der vorbestimmten ersten Verankerungsstelle ist vorteilhaft für Anwendungen, in denen im Bereiche der ersten Verankerung 10 die Holzmaserung parallel zur Bohrungsachse ausgerichtet ist und das Holz des Teiles 1 sich schon bei einer leichten Verdrängung spaltet.

Etwa derselbe Effekt ist erzielbar mit einem spitz zulaufenden Stiftende, das in seiner ersten Position auf einem etwa gleich spitz zulaufenden Bohrungsende aufsitzt.

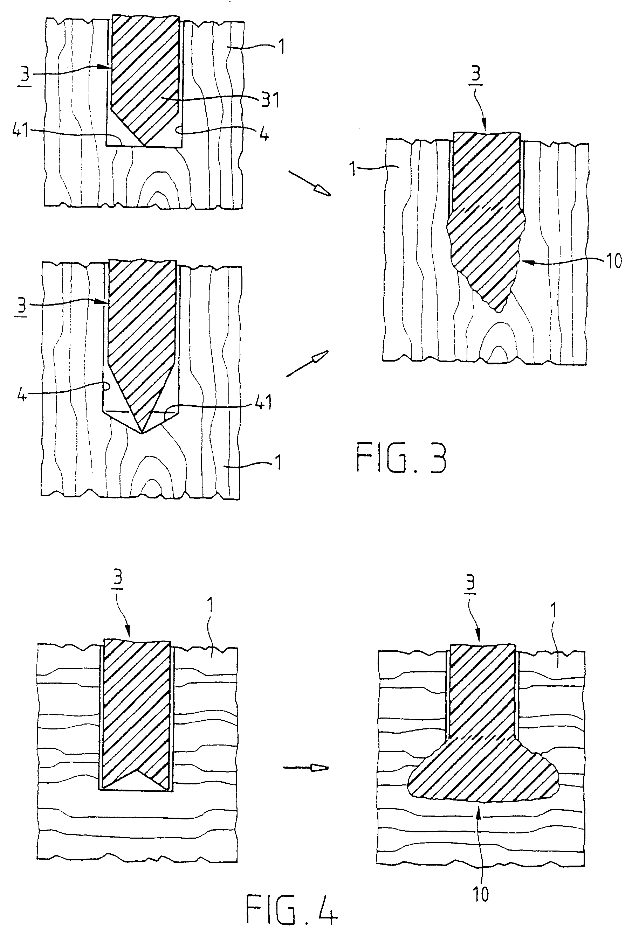

**Figuren 3 bis 5** zeigen weitere, für spezifische Anwendungen vorteilhafte Ausführungsformen von vorbestimmten, ersten Verankerungsstellen 31 an beispielsweise stiftförmigen Verbindungselementen 3 und damit kooperierende geschlossene Enden 41 von Bohrungen 4, die insbesondere bei Ultraschallanwendung zu verschiedenen Verankerungen 10 führen.

**Figur 3** zeigt in zwei Varianten ein Ende eines Verbindungsstiftes 3, das in einem geschlossenen Ende einer Bohrung 4 aufsitzt. In beiden Fällen ist das Stiftende zugespitzt und zwar spitzer als das Bohrungsende. Dadurch wird der beim Einpressen des Verbindungsstiftes 3 in die Bohrung 4 entstehende Druck mittig konzentriert, wodurch das Material noch verstärkt parallel zur Stiftachse in den Teil 1 gepresst wird, sodass auch hier die entstehende Verankerung 10 sich mehr in der Achsrichtung erstreckt als quer dazu. Die Festigkeit einer derartigen Verankerung beruht vor allem auf einer Vergrösserung der auf Scherung belasteten Flächen im Holz.

**Figur 4** zeigt ein Ende eines Stiftes 3, das eine konkave Form hat. Beim Einpressen dieses Stiftes in eine Bohrung mit einem flachen oder spitzen geschlossenen Ende baut sich der Druck vor allem an radialen Positionen auf, wodurch eine Verankerung 10 entsteht, die sich mehr quer zur Stiftachse erstreckt. Eine derartige Verankerung eignet sich vor allem für einen Teil 1, in dem die Maserung quer zur Stiftachse verläuft, oder für eine Verankerung in einer Spanplatte, deren Oberfläche quer zur Stiftachse angeordnet ist. Die Festigkeit einer derartigen Verankerung beruht vor allem im entstehenden Formschluss zwischen hölzernem Teil und Verbindungsstift.

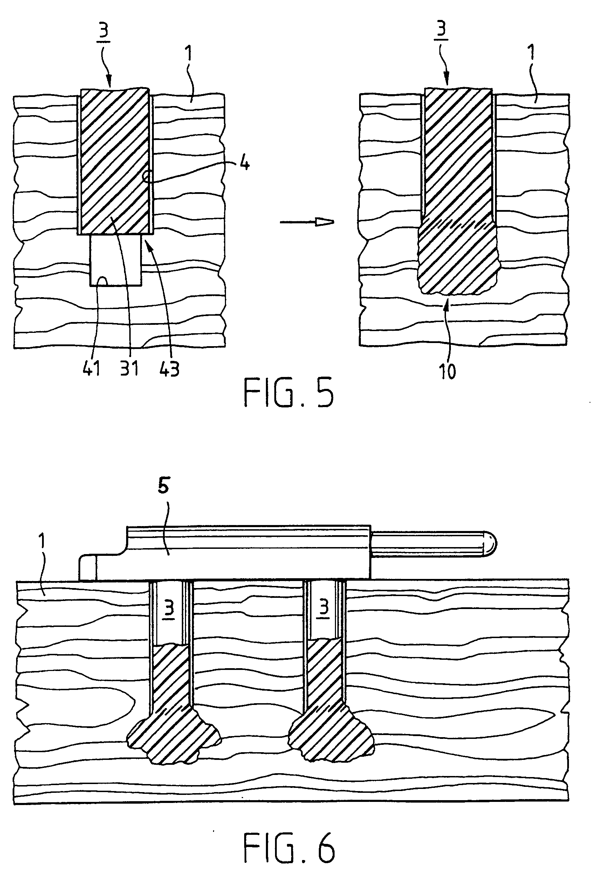

**Figur 5** zeigt eine weitere Ausführungsform der vorbestimmten ersten Verankerungsstelle 31 an einem Verbindungsstift 3 und ein entsprechendes Bohrungsende 41. Es handelt sich dabei um eine erste Verankerungsstelle, die im wesentlichen gleich ausgebildet ist wie die zweite Verankerungsstelle der Figur 2. Die Bohrung 4 weist eine stufenförmige Querschnittsverengung 43 auf, auf der der Stift in seiner ersten Position aufsitzt. Wird dieser Verbindungsstift in die Bohrung gepresst, baut sich im Bereich des Bohrungsendes vor allem radial ein Druck auf und wird das plastifizierte Material vor allem quer zur Stiftachse in das Holz gepresst.

**Figur 6** zeigt einen aus einem beliebigen Material bestehenden Teil 5, der mit Hilfe von stiftförmigen Verbindungselementen 3, die in einem Teil 1 beispielsweise aus Holz nach dem erfindungsgemässen Verfahren verankert sind, an diesem Teil 1 befestigt ist. Der Teil 5 ist ein Beschlag (z.B. ein Scharnierteil) beispielsweise aus Kunststoff. Die beiden Verbindungsstifte 3 sind an den Teil 5 angeformt oder in einer anderen geeigneten Weise damit verbunden und werden in der beschriebenen Weise in Bohrungen des Teiles 1 getrieben und darin verankert. Auch hier kann, wie bereits im Zusammenhang mit der Figur 1 bezüglich eines Verbindungsstift-Kopfes erwähnt, der Teil 5 irgend eine Form haben und er kann auch nach Erstellung der Verankerung auf dem Verbindungsstift 3 oder auf den Verbindungsstiften 3 in geigneter Weise aufgesetzt werden.

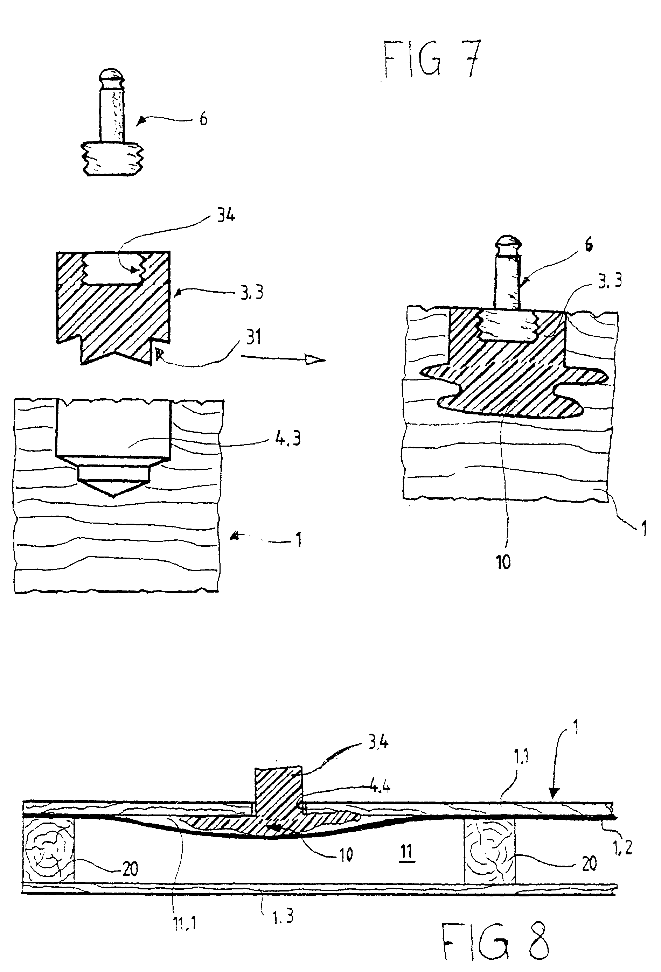

**Figur 7** zeigt die Erstellung einer Verbindung eines hölzernen Teils 1 mit einem Beschlagteil 6 beispielsweise aus Metall mittels erfindungsgemässer Verankerung eines Verhindungselmentes 3.3 in Teil 1 und Befestigung des Beschlagteils 6 am verankerten Verbindungselement 3.3. Das Verbindungselement 3.3 weist eine zweistufige, erste Verankerungsstelle 31 auf und wird in eine Bohrung 4.3 mit sich stufenweise verengendem Grund eingeführt. Bohrung 4.3 und Verbindungslement 3.3 wirken beim Einpressen des Verbindungselementes in die Bohrung und beim gleichzeitigen Plastifizieren der Verankerungsstelle 31, wie dies im Zusammenhang mit der Figur 4 erläutert wurde. Es bildet sich dabei eine entsprechende "zweistufige" Verankerung 10.

Das Verbindungselement 3.3 der Figur 7 weist an seiner der vorgegebenen Verankerungsstelle gegenüberliegenden, äusseren Seite als Mittel zur Befestigung eines weiteren Teiles ein Innengewinde 34 auf, in das nach der Verankerung des Verbindungselementes 3.3 im Teil 1 der Beschlagteil 6 eingeschraubt wird.

**Figur 8** zeigt das Resultat einer weiteren, beispielhaften Ausführungsform des erfindungsgemässen Verfahrens, nämlich eine Verankerung eines Verbindungselementes 3.4 in einem Teil 1, der ein Leichtbauelement mit Hohlräumen 11 ist. Die für das erfindungsgemässe Verfahren notwendige, geschlossene Bohrung, in die das Verbindungselement 3.4 eingeführt wird, ist in diesem Falle eine durchgehende Bohrung 4.4, durch die eine der äusseren Schichten 1.1 des Teils 1. Diese durchgehende Bohrung 4.4 ist durch ein weiteres Element, beispielsweise durch eine innere Schicht 1.2 oder gegebenenfalls durch die gegenüberliegende äussere Schicht 1.3 derart geschlossen, dass zwischen der durchgehenden Bohrung 4.4 und dem sie verschliessenden Element sich ein im wesentlichen quer zur Bohrungsachse erstreckender Hohlraumbereich 11.1 öffnet oder durch den Druck des Verbindungselementes 3.4 auf das die Bohrung verschliessende Element erzeugt wird, beispielsweise durch entsprechende Deformation der Innenschicht 1.2.

Das Verbindungslement wird 3.4 in die Bohrung 4.4 eingesteckt und durch das die Bohrung schliessende Element (z.B. Innenschicht 1.2) positioniert. Dann wird das Verbindungslement 3.4 gegen das die Bohrung schliessende Element gepresst und gleichzeitig das Kunststoffmaterial im Bereich dieses Elementes plastifiziert und in den Hohlraumbereich 11.1, der zwischen der Aussenschicht 1.1 und dem die Bohrung schliessenden Element vorhanden ist oder erzeugt wird, gepresst, wodurch eine makroskopische Verankerung 10 entsteht.

Das Verfahren gemäss Figur 8 eignet sich, wie dies auch dargestellt ist, insbesondere für Anwendungen im Leichtbau, wo anstelle von massivem Material dünnes, plattenförmiges Material getragen durch eine Tragkonstruktion (angedeutet durch die beiden Latten 20) zur Anwendung kommt. Die Aussenschichten 1.1 und 1.3 sind dabei beispielsweise dünne Massivholzplatten oder beschichtete Spanplatten. Das die Bohrung 4.4 schliessende Element kann eine von einer Latte 20 zu einer benachbarten Latte 20 oder sich über die ganze Fläche der ersten Schicht erstreckende, beispielsweise aus Kunststoff oder Metall bestehende Innenschicht 1.2 sein oder ein örtlich und speziell für diesen Zweck in den Hohlraum 11 integriertes, anders geformtes Element.

Das Verbindungselement 3.4 gemäss Figur 8 ist beispielsweise geeignet für die Befestigung von Beschlägen an Leichtbauelementen.

Thermoplastische Materialien zum Einsatz in Verbindungselementen haben vorteilhafterweise eine hohe mechanische Festigkeit, insbesondere eine hohe Zugfestigkeit und ein hohes E-Modul. Es eignen sich insbesondere Polyamide, Polycarbonate oder Polyestercarbonate. Zur Erhöhung der Festigkeit kann der Kunststoff eines Verbindungselementes auch beispielsweise Glas- oder Kohlestofffasern enthalten. Weitere Thermoplaste, die sich für Verbindungselemente eignen, sind: Acrylnitril-Butadien-Styrol, Styrol-Acrylnitril, Polymethylmetacrylat, Polyvinylchlorid, Polyethylen, Polypropylen und Polystyrol.

Ein beispielhafter Verbindungsstift zum Zusammenfügen von zwei Holzteilen, wie sie in der Figur 2 dargestellt sind, hat beispielsweise die in der Figur 2 dargestellte Form und besteht voll aus Acrylnitril-Butadien-Styrol. Er hat einen kleineren runden Querschnitt mit 8mm Durchmesser und einen grösseren runden Querschnitt mit 10mm Durchmesser. Er ist 60mm lang und weist die Querschnittsverengung mittig auf. Die entsprechende Bohrung ist 40mm tief und weist die der Querschnittsverengung des Stiftes entsprechende Stufe auf 30mm Höhe auf. Der Stift wird in die Bohrung gesteckt und während 5s mit einer Presskraft von 2000N und einer Ultraschallanregung mit einer Amplitude von ca. 44µm in die Bohrung gepresst. Das Stiftende ist danach bündig mit der Holzoberfläche.

## Patentansprüche

1. Verfahren zur Verankerung eines Verbindungselementes (3, 3.1 bis 3.4) in einem Teil (1), der aus einem porösen Material besteht, der Hohlräume (11.1) aufweist oder in dem durch Druck Hohlräume erzeugbar sind, wobei das Verbindungselement in eine Bohrung (4, 4.1 bis 4.4) mit einem inneren, geschlossenen Ende (41) eingebracht wird, und wobei das Verbindungselement (3, 3.1 bis 3.4) in einer ersten Position in der Bohrung positioniert wird und das Verbindungselement dann mit einer im wesentlichen parallel zur Bohrungsachse gerichteten Presskraft (F) von der ersten Position in eine zweite Position tiefer in der Bohrung gepresst wird, wobei das Verbindungselement (3, 3.1 bis 3.4) und die Bohrung (4, 4.1 bis 4.4) derart aufeinander abgestimmt sind, dass das Verbindungselement im wesentlichen ohne Kraftaufwand in der ersten Position positionierbar ist und dass beim Pressen in die zweite Position an mindestens einer vorbestimmten Verankerungsstelle (31, 33) zwischen dem Verbindungselement (3, 3.1 bis 3.4) und der Wand der Bohrung (4, 4.1 bis 4.4) Druck aufgebaut wird, wobei das Verbindungselement mindestens im Bereich der vorbestimmten Verankerungsstelle (31, 33) aus einem thermoplastischen Kunststoff besteht und wobei während dem Pressen des Verbindungselementes in die zweite Position dem Verbindungselement Energie zugeführt wird, derart, dass der thermoplastische Kunststoff im Bereiche der mindestens einen vorbestimmten Verankerungsstelle (31, 33) plastifiziert und durch den Druck in die Poren oder Hohlräume des Teiles (1) gepresst wird und eine makroskopische Verankerung (10, 20) bildet, **dadurch gekennzeichnet, dass** das Verbindungselement an der dem inneren, geschlossenen Ende (41) der Bohrung (4, 4.1 bis 4.4) entgegengesetzten, äusseren Seite eine Stirnfläche aufweist, und dass die Presskraft (F) direkt auf die Stirnfläche wirkend zugeführt wird.

2. Verfahren nach Anspruch 1, **dadurch gekennzeichnet, dass** die Stirnfläche an der äusseren Seite des Verbindungselementes (3, 3.1 bis 3.4) in der ersten Position über der Bohrung (4, 4.1 bis 4.4) vorsteht, und dass das Verbindungselement (3, 3.1 bis 3.4) derart in die Bohrung (4, 4.1 bis 4.4) gepresst wird, dass die Stirnfläche in der zweiten Position nicht mehr über der Bohrung (4, 4.1 bis 4.4) vorsteht.

3. Verfahren nach Anspruch 1 oder 2, **dadurch gekennzeichnet, dass** die mindestens eine vorgegebene Verankerungsstelle (31) im Bereiche des geschlossenen Bohrungsendes (41) vorgesehen wird, dadurch, dass das Verbindungselement (3, 3.1 bis 3.4) und die Bohrung (4, 4.1 bis 4.4) derart aufeinander abgestimmt werden, dass das Verbindungselement in seiner ersten Position bis an das geschlossene Ende der Bohrung reicht.

4. Verfahren nach Anspruch 1 oder 2, **dadurch gekennzeichnet, dass** die mindestens eine vorgegebene Verankerungsstelle (31) im Bereiche des geschlossenen Bohrungsendes (41) vorgesehen wird, dadurch, dass das Verbindungselement (3, 3.1 bis 3.4) und die Bohrung (4, 4.1 bis 4.4) derart aufeinander abgestimmt werden, dass das Verbindungselement auf einer Querschnittsverengung (43) der Bohrung im Bereiche des geschlossenen Endes (41) aufsitzt.

5. Verfahren nach einem der Ansprüche der 2 bis 4, **dadurch gekennzeichnet, dass** das Verbindungselement ein Verbindungsstift (3.2) zur Verbindung des ersten Teils (1) mit einem zweiten Teil (2.1, 2.2) ist, dass die Bohrung (4) durch den zweiten Teil (2.1, 2.2) durchgebohrt wird, und dass beim Einpressen des Verbindungsstiftes (3.2) von der ersten Position in die zweite Position zumindest im ersten Teil (1) eine makroskopische Verankerung (10, 20) ausgebildet wird.

6. Verfahren nach einem der Ansprüche 2 bis 5, **dadurch gekennzeichnet, dass** das Verbindungselement ein Verbindungsstift (3.2) zur Verbindung des ersten Teils (1) mit einem zweiten Teil (2.2) aus einem ebenfalls porösen Material oder mit Hohlräumen ist, dass die Bohrung (4.2) durch den zweiten Teil (2) durchgebohrt wird und dass im zweiten Teil (2.2) eine weitere Verankerungsstelle (33) angeordnet wird, dadurch, dass die Bohrung (4.2) im zweiten Teil (2.2) eine stufenförmige Querschnittsverengung (42) aufweist und der Verbindungsstift (3.2) eine der Querschnittsverengung (42) im wesentlichen entsprechende Schulter aufweist, mit der er in seiner ersten Position auf der stufenförmigen Querschnittsverengung (42) aufsitzt.

7. Verfahren nach einem der Ansprüche 2 bis 5, **dadurch gekennzeichnet, dass** das Verbindungselement ein Verbindungsstift (3.1) ist und dass zur Verbindung des ersten Teils (1) mit einem zweiten Teil (2.1) die Bohrung (4.1) durch den zweiten Teil (2.1) führt und der Verbindungsstift (3.1) eine kopfähnliche Verdickung aufweist.

8. Verfahren nach einem der Ansprüche 2 bis 5, **dadurch gekennzeichnet, dass** zur Verbindung eines zweiten Teiles (5, 6) mit dem ersten Teil (1) der zweite Teil (5, 6) einstückig mit dem Verbindungselement (3) hergestellt wird oder vor oder nach der Verankerung am Verbindungselement (3.3) befestigt wird.

9. Verfahren nach einem der vorhergehenden Ansprüche, **dadurch gekennzeichnet, dass** das Verbindungselement (3, 3.1 bis 3.4) zur Zuführung von Energie mit Ultraschall angeregt wird.

10. Verfahren nach einem der Ansprüche 1 bis 8, **dadurch gekennzeichnet, dass** das Verbindungselement (3, 3.1 bis 3.4) ganz aus thermoplastischem Kunststoff besteht, wobei der thermoplastische Kunststoff im Bereich der mindestens einen Verankerungsstelle (31, 32) bei tieferen Temperaturen plastifizierbar ist als der Rest des Verbindungselementes und dass dem Verbindungselement (3, 3.1 bis 3.4) Energie in Form von Wärme zugeführt wird.

11. Verfahren nach einem der Ansprüche 1 bis 8, **dadurch gekennzeichnet, dass** das Verbindungselement (3, 3.1 bis 3.4) im Bereich der mindestens einen Verankerungsstelle (31, 33) Oberflächenbereiche aus einem thermoplastischen Material mit darin eingelagerten Metallteilchen aufweist und dass das Verbindungselement (3, 3.1 bis 3.4) zur Zuführung von Energie induktiv erhitzt wird.

12. Verfahren nach einem der vorhergehenden Ansprüche, **dadurch gekennzeichnet, dass** der Teil (1, 2.2), in dem das Verbindungselement (3, 3.1 bis 3.3) verankert wird, aus Holz oder aus einem holzähnlichen Material besteht.

13. Verfahren nach einem der Ansprüche 1 bis 11, **dadurch gekennzeichnet, dass** der Teil (1, 2), in dem das Verbindungselement (3, 3.1 bis 3.3) verankert wird, aus Sandstein, aus einem porösen, keramischen Material, aus Backstein oder aus Beton besteht.

14. Verfahren nach einem der Ansprüche 1 bis 11, **dadurch gekennzeichnet, dass** der Teil (1), in dem das Verbindungselement (3.4) verankert wird, ein Leichtbauelement mit Hohlräumen (11) ist und dass die Bohrung (4.4) eine durchgehende Bohrung durch eine Aussenschicht (1.1) ist, die durch eine Inneschicht (1.2) oder durch ein im Hohlraum (11) angeordnetes Element derart geschlossen ist, dass im Bereich des geschlossenen Endes der Bohrung (4.4) im wesentlichen radiale Öffnungen in Hohlraumbereiche (11.1) bestehen oder durch die Presskraft erzeugt werden.

15. Verbindungselement (3, 3.1 bis 3.4) zur Anwendung in einem Verfahren nach einem der Ansprüche 1 bis 14, welches Verbindungselement eine gegen das geschlossene Ende der Bohrung (4, 4.1 bis 4.4) zu richtende, innere Seite und eine dieser gegenüberliegende, äussere Seite hat, **dadurch gekennzeichnet, dass** das Verbindungselement (3, 3.1 bis 3.4) auf seiner inneren Seite eine erste vorbestimmte Verankerungsstelle (31) mit mindestens Oberflächenbereichen aus einem thermoplastischen Kunststoffmaterial aufweist, und auf der äusseren Seite ein Mittel (34) zur Befestigung eines weiteren Teils (6) aufweist.

16. Verbindungselement nach Anspruch 15, **dadurch gekennzeichnet, dass** es als Mittel zur Befestigung eines weiteren Teiles (6) ein Innengewinde (34) aufweist.

17. Verbindungselement nach einem der Ansprüche 15 bis 16, **dadurch gekennzeichnet, dass** es ganz aus thermoplastischem Kunststoff besteht.

18. Verbindungselement nach Anspruch 17, **dadurch gekennzeichnet, dass** der thermoplastische Kunststoff im Bereiche der vorgegebenen Verankerungsstellen (31, 33) bei einer tieferen Temperatur plastifizierbar ist als der thermoplastische Kunststoff in den anderen Bereichen des Verbindungselementes.

19. Verbindungselement nach einem der Ansprüche 15 bis 16, **dadurch gekennzeichnet, dass** es aus einem Duroplast besteht und an den vorgegebenen Verankerungsstellen (31, 33) Oberflächenbereiche aus einem thermoplastischen Kunststoff aufweist.

20. Verbindungselement nach einem der Ansprüche 15 bis 19, **dadurch gekennzeichnet, dass** es in den thermoplastischen Kunststoff im Bereiche der vorgegebenen Verankerungsstellen eingelagerte Metallteilchen aufweist.

21. Verbindungselement nach einem der Ansprüche 15 bis 20, **dadurch gekennzeichnet, dass** es stiftförmig ist und auf seiner inneren Seite spitz zuläuft, oder eine flache oder konkave Stirnfläche aufweist.

22. Verbindungselement nach einem der Ansprüche 15 bis 21, **dadurch gekennzeichnet, dass** der thermoplastische Kunststoff ein Polyamid, ein Polycarbonat oder ein Polyestercarbonat oder Acrylnitril-Butadien-Styrol, Styrol-Acrylnitril, Polymethylmetacrylat, Polyvinylchlorid, Polyethylen, Polypropylen oder Polystyrol ist.

23. Verwendung des Verfahrens nach einem der Ansprüche 1 bis 14 und eines Verbindungselementes nach einem der Ansprüche 15 bis 22 zum Verbinden der einzelnen Teile von Fensterrahmen oder Schalusien aus Massivholz.

24. Verwendung des Verfahrens nach einem der Ansprüche 1 bis 14 und eines Verbindungselementes nach einem der Ansprüche 15 bis 22 zum Befestigen von Beschlägen auf Spanplatten oder Leichtbauelementen.

## Claims

1. Method for anchoring a joining element (3, 3.1 to 3.4) in one part (1), which is made of a porous material having cavities (11.1) or in which cavities can be produced by pressure, the joining element being introduced into a bore (4, 4.1 to 4.4) with an inner, closed end (41), and wherein the joining element (3, 3.1 to 3.4) is positioned in the bore in a first position and that the joining element is then pressed more deeply into the bore from the first position into a second position with a pressing force (F) oriented substantially parallel to the bore axis, the joining element (3, 3.1 to 3.4) and the bore (4,4.1 to 4.4) being matched to one another such that the joining element can be positioned in the first position substantially without force expenditure and that on pressing into the second position pressure is built up in at least one predetermined anchoring point (31, 33) between the joining element (3, 3.1 to 3.4) and the wall of the bore (4, 4.1 to 4.4), the joining element being made of a thermoplastic material at least in the vicinity of the predetermined anchoring point (31, 33) and during the pressing of the joining element into the second position energy is supplied to the joining element in such a way that the thermoplastic material is plasticized in the vicinity of the at least one predetermined anchoring point (31, 33) and by the pressure is pressed into the pores or cavities of the part (1) and a macroscopic anchoring (10, 20) is formed, **characterized in that** the joining element comprises a face on its outer side opposite the closed inner end (41) of the bore (4, 4.1 to 4.4) and that the pressing force (F) is applied to directly affect the face.

2. Method according to claim 1, **characterized in that** the face on the outer side of the joining element (3, 3.1 to 3.4) protrudes from the bore (4, 4.1 to 4.4) in the first position and that the joining element (3, 3.1 to 3.4) is pressed into the bore (4, 4.1 to 4.4) such that the face no longer protrudes from the bore (4, 4.1 to 4.4) in the second position.

3. Method according to claim 1 or 2, **characterized in that** the at least one predetermined anchoring point (31) is provided in the vicinity of the closed bore end (41) and that the joining element (3, 3.1 to 3.4) and the bore (4, 4.1 to 4.4) are matched to one another such that in its first position the joining element extends up to the closed end of the bore.

4. Method according to claim 1 or 2, **characterized in that** the at least one predetermined anchoring point (31) is provided in the vicinity of the closed bore end (41) and that the joining element (3, 3.1 to 3.4) and the bore (4, 4.1 to 4.4) are matched to one another such that the joining element rests on a cross-sectional reduction (43) of the bore in the vicinity of the closed end (41).

5. Method according to one of claims 2 to 4, **characterized in that** the joining element is a joining pin (3.2) for joining the first part (1) to a second part (2.1, 2.2), that the bore (4) passes through the second part (2.1, 2.2) and that the bore (4.2) in the second part (2.2) and that when the joining pin (3.2) is pressed from the first position into the second position a macroscopic anchoring (10, 20) is formed at least in the first part (1).

6. Method according to one of claims 2 to 5, **characterized in that** the joining element is a joining pin (3.2) for connecting the first part (1) with the second part (2.2) made of a porous material or a material with cavities, that the bore (4.2) is bored through the second part (2) and that in the second part (2.2) a further anchoring point (33) is arranged in the second part (2.2) **in that** the bore (4.2) comprises a step-like cross-sectional reduction (42) and the joining pin (3.2) has a shoulder substantially corresponding to the cross-sectional reduction (42) with which it rests in its first position on the step-like cross-sectional reduction (42).

7. Method according to one of claims 2 to 5, **characterized in that** the joining element is a joining pin (3.1) and that for joining the first part (1) to a second part (2.1) the bore (4.1) passes through the second part (2.1) and the joining pin (3.1) has a head-like thickening.

8. Method according to one of claims 2 to 5, **characterized in that** for joining a second part (5, 6) to the first part (1), the second part (5, 6) is produced in one piece with the joining element (3) or is fixed before or after anchoring to the joining element (3.3).

9. Method according to one of the preceding claims, **characterized in that** the joining element (3, 3.1 to 3.4) is ultrasonically excited for supplying energy.

10. Method according to one of claims 1 to 8, **characterized in that** the joining element (3, 3.1 to 3.4) is made entirely of a thermoplastic material, which can be plasticized at lower temperatures in the vicinity of the at least one anchoring point (31, 32) than the remainder of the joining element and that energy in the form of heat is supplied to the joining element (3, 3.1 to 3.4).

11. Method according to one of claims 1 to 8, **characterized in that**, in the vicinity of the at least one anchoring point (31, 33), the joining element (3, 3.1 to 3.4) has surface areas of a thermoplastic material with metal particles incorporated therein and that the joining element (3, 3.1 to 3.4) is inductively heated for supplying energy.

12. Method according to one of the preceding claims, **characterized in that** the part (1, 2.2) in which the joining element (3, 3.1 to 3.3) is anchored is made of wood or a woodlike material.

13. Method according to one of claims 1 to 11, **characterized in that** the part (1, 2) in which the joining element (3, 3.1 to 3.3) is anchored comprises sandstone, a porous, ceramic material, brick or concrete.

14. Method according to one of claims 1 to 11, **characterized in that** the part (1) in which the joining element (3.4) is anchored is a lightweight structural component with cavities (11) and that the bore (4.4) is a through bore through an outer layer (1.1) and is closed by an inner layer (1.2) or by an element located in the cavity (11) such that in the vicinity of the closed end of the bore (4.4) there are essentially radial openings in the cavity areas (11.1) or these are produced by the pressing force.

15. Joining element (3, 3.1 to 3.4) for use in a method according to one of claims 1 to 14, said joining element having an inside to be directed against the closed end of the bore (4, 4.1 to 4.4) and an outside facing it, **characterized in that** on its inside the joining element (3, 3.1 to 3.4) comprises a first, predetermined anchoring point (31) with at least surface areas made from a thermoplastic material and on the outside means (34) for fixing a further part (6).

16. Joining element according to claim 15, **characterized in that** it comprises an internal thread (34) as a means for fixing a further part (6).

17. Joining element according to one of the claims 15 to 16, **characterized in that** it is made entirely from thermoplastic material.

18. Joining element according to claim 17, **characterized in that**, in the vicinity of the predetermined anchoring points (31, 33), the thermoplastic material is plasticizable at a lower temperature than the thermoplastic material in the other areas of the joining element.

19. Joining element according to one of the claims 15 to 16, **characterized in that** it comprises a thermosetting material and at the predetermined anchoring points (31, 33) from surface areas a thermoplastic material.

20. Joining element according to one of the claims 15 to 19, **characterized in that** in the thermoplastic material it comprises metal particles incorporated into the vicinity of the predetermined anchoring points.

21. Joining element according to one of the claims 15 to 20, **characterized in that** it is pin-like and tapers to a point on its inside, or comprises a flat or concave face.

22. Joining element according to one of the claims 12 to 19, **characterized in that** the thermoplastic material is a polyamide, a polycarbonate or a polyester carbonate or acrylonitrile-butadiene-styrene, styrene- acrylonitrile, polymethylmethacrylate, polyvinyl chloride, polyethylene, polypropylene or polystyrene.

23. Use of the method according to one of the claims 1 to 14 and a joining element according to one of the claims 15 to 22 for joining the individual parts of solid wood shutters or window frames.

24. Use of the method according to one of the claims 1 to 14 and a joining element according to one of the claims 12 to 20 for fixing fittings to chipboard or lightweight structural components.

## Revendications

1. Procédé pour l'ancrage d'un élément de liaison (3, 3.1 à 3.4) dans une pièce (1) constituée d'un matériau poreux ou qui présente des espaces vides (11.1) ou dans laquelle des espaces vides peuvent être créés par pression, l'élément de liaison étant inséré dans un alésage (3, 4.1 à 4.4) qui présente une extrémité intérieure fermée (41), l'élément de liaison (3, 3.1 à 3.4) étant placé dans une première position dans l'alésage et l'élément de liaison étant ensuite enfoncé dans l'alésage depuis la première position jusque dans une deuxième position plus profonde par une force de poussée (F) orientée essentiellement en parallèle à l'axe de l'alésage, l'élément de liaison (3, 3.1 à 3.4) et l'alésage (4, 4.1 à 4.4) étant accordés l'un à l'autre de telle sorte que l'élément de liaison puisse être placé dans la première position essentiellement sans exercer de force et que lorsqu'il est enfoncé dans la deuxième position, une pression s'établit en au moins un emplacement d'ancrage défini (31, 33) entre l'élément de liaison (3, 3.1 à 3.4) et la paroi de l'alésage (4, 4.1 à 4.4), l'élément de liaison étant constitué d'un matériau synthétique thermoplastique au moins dans la zone de l'emplacement d'ancrage prédéterminé (31, 33), tandis que pendant l'enfoncement de l'élément de liaison dans la deuxième position, de l'énergie est apportée à l'élément de liaison de telle sorte que le matériau synthétique thermoplastique soit plastifié dans la zone de l'emplacement d'ancrage prédéterminé (31, 33) au moins présent et est refoulé par la pression dans les pores ou espaces vides de la pièce (1) pour former un ancrage macroscopique (10, 20), **caractérisé en ce que** sur son côté extérieur opposé à l'extrémité intérieure fermée (41) de l'alésage (4, 4.1 à 4.4), l'élément de liaison présente une surface frontale et **en ce que** la force de poussée (F) est amenée à agir directement sur la surface frontale.

2. Procédé selon la revendication 1, **caractérisé en ce que** dans la première position, la surface frontale située sur le côté extérieur de l'élément de liaison (3, 3.1 à 3.4) déborde de l'alésage (4, 4.1 à 4.4) et **en ce que** l'élément de liaison (3, 3.1 à 3.4) est enfoncé dans l'alésage (4, 4.1 à 4.4) de telle sorte que dans la deuxième position, la surface frontale ne déborde plus de l'alésage (4, 4.1 à 4.4).

3. Procédé selon la revendication 1 ou 2, **caractérisé en ce que** l'emplacement d'ancrage prédéterminé (31) au moins présent est prévu dans la zone de l'extrémité fermée (41) de l'alésage et **en ce que** l'élément de liaison (3, 3.1 à 3.4) et l'alésage (4, 4.1 à 4.4) sont accordés l'un à l'autre de telle sorte que dans sa première position, l'élément de liaison atteint l'extrémité fermée de l'alésage.

4. Procédé selon la revendication 1 ou 2, **caractérisé en ce que** l'emplacement d'ancrage prédéterminé (31) au moins présent est prévu dans la zone de l'extrémité fermée (41) de l'alésage et **en ce que** l'élément de liaison (3, 3.1 à 3.4) et l'alésage (4, 4.1 à 4.4) sont accordés l'un à l'autre de telle sorte que l'élément de liaison repose sur un rétrécissement (43) de la section transversale de l'alésage dans la région de l'extrémité fermée (41).

5. Procédé selon l'une des revendications 2 à 4, **caractérisé en ce que** l'élément de liaison est une tige de liaison (3.2) destinée à relier la première pièce (1) à une deuxième pièce (2.1, 2.2), **en ce que** l'alésage (4) est foré à travers la deuxième pièce (2.1, 2.2) et **en ce que** lorsque la tige de liaison (3.2) est enfoncée depuis la première position jusque dans la deuxième position, un ancrage macroscopique (10, 20) est formé au moins dans la première pièce (1).

6. Procédé selon l'une des revendications 2 à 5, **caractérisé en ce que** l'élément de liaison est une tige de liaison (3.2) destinée à relier la première pièce (1) à une deuxième pièce (2.2) en un matériau poreux ou dotée d'espaces vides, **en ce que** l'alésage (4.2) est foré à travers la deuxième partie (2) et **en ce qu'**un autre emplacement d'ancrage (33) est disposé dans la deuxième pièce (2.2) par le fait que dans la deuxième pièce (2.2), l'alésage (4.2) présente un rétrécissement en forme de gradin (42) de sa section transversale, la tige de liaison (3.2) présentant un épaulement qui correspond essentiellement au rétrécissement (42) de la section transversale et par lequel elle repose dans sa première position sur le rétrécissement de la section transversale en forme de gradin (42).

7. Procédé selon l'une des revendications 2 à 5, **caractérisé en ce que** l'élément de liaison est une tige de liaison (3.1) et **en ce que** pour relier la première pièce (1) à une deuxième pièce (2.1), **en ce que** l'alésage (4.1) traverse la deuxième pièce (2.1) et **en ce que** la tige de liaison (3.1) présente un épaississement en forme de tête.

8. Procédé selon l'une des revendications 2 à 5, **caractérisé en ce que** pour relier une deuxième pièce (5, 6) à la première pièce (1), la deuxième pièce (5, 6) est réalisée d'un seul tenant avec l'élément de liaison (3) ou est fixée à l'élément de liaison (3.3) avant ou après l'ancrage.

9. Procédé selon l'une des revendications précédentes, **caractérisé en ce que** l'élément de liaison (3, 3.1 à 3.4) est excité par apport d'énergie par ultrasons.

10. Procédé selon l'une des revendications 1 à 8, **caractérisé en ce que** l'élément de liaison (3, 3.1 à 3.4) est entièrement réalisé en matière synthétique thermoplastique, la matière synthétique thermoplastique étant plastifiable dans la zone de l'emplacement d'ancrage (31, 32) au moins présent à des températures plus basses que le reste de l'élément de liaison, et **en ce que** l'énergie est apportée à l'élément de liaison (3, 3.1 à 3.4) sous la forme de chaleur.

11. Procédé selon l'une des revendications 1 à 8, **caractérisé en ce que** dans la zone de l'emplacement d'ancrage (31, 33) au moins présent, l'élément de liaison (3, 3.1 à 3.4) présente des zones de surface en matière thermosplastique dans laquelle sont incorporées des particules métalliques, et **en ce que** l'élément de liaison (3, 3.1 à 3.4) est chauffé par induction pour lui apporter de l'énergie.

12. Procédé selon l'une des revendications précédentes, **caractérisé en ce que** la partie (1, 2.2) dans laquelle l'élément de liaison (3, 3.1 à 3.4) est ancré est constituée de bois ou d'un matériau similaire à du bois.

13. Procédé selon l'une des revendications 1 à 11, **caractérisé en ce que** la pièce (1, 2) dans laquelle l'élément de liaison (3, 3.1 à 3.4) est ancré est constitué de grès dur, d'un matériau céramique poreux, de brique ou de béton.

14. Procédé selon l'une des revendications 1 à 11, **caractérisé en ce que** la pièce (1) dans laquelle l'élément de liaison (3, 4) est ancré est un élément léger de construction doté d'espaces vides (11) et **en ce que** l'alésage (4.4) est un alésage qui traverse une couche extérieure (1.1) qui est fermée par une couche intérieure (1.2) ou par un élément disposé dans l'espace vide (11), de telle sorte que dans la zone de l'extrémité fermée de l'alésage (4.4), des ouvertures essentiellement radiales sont formées ou sont créées par la force de poussée dans la zone de l'espace vide (11.1).

15. Elément de liaison (3, 3.1 à 3.4) destiné à être utilisé dans un procédé selon l'une des revendications 1 à 14, lequel élément de liaison présente un côté intérieur dirigé vers l'extrémité fermée de l'alésage (4, 4.1 à 4.4) et un côté extérieur opposé au premier, **caractérisé en ce que** sur son côté intérieur, l'élément de liaison (3, 3.1 à 3.4) présente un premier emplacement d'ancrage prédéterminé (31) dont au moins certaines zones de la surface sont constituées de matière synthétique thermoplastique et sur le côté extérieur un moyen (34) pour fixer une autre pièce (6).

16. Elément de liaison selon la revendication 15, **caractérisé en ce que** comme moyen de fixation d'une autre pièce (6), il présente un filet intérieur (34).

17. Elément de liaison selon l'une des revendications 15 à 16, **caractérisé en ce qu'**il est entièrement réalisé en matière synthétique thermoplastique.

18. Elément de liaison selon la revendication 17, **caractérisé en ce que**, dans la zone des emplacements d'ancrage prédéterminés (31, 33), la matière synthétique thermoplastique est plastifiable à une température plus basse que la matière synthétique thermoplastique des autres parties de l'élément de liaison.

19. Elément de liaison selon l'une des revendications 15 à 16, **caractérisé en ce qu'**il est réalisé en matière plastique thermodurcissable et **en ce qu'**il présente aux emplacements d'ancrage prédéterminés (31, 3) des parties de surface en matière synthétique thermoplastique.

20. Elément de liaison selon l'une des revendications 15 à 19, **caractérisé en ce que** dans la zone des emplacements d'ancrage prédéterminés, il présente des particules métalliques incorporées dans la matière synthétique thermoplastique.

21. Elément de liaison selon l'une des revendications 15 à 20, **caractérisé en ce qu'**il présente la forme d'une tige qui se termine en pointe sur son côté intérieur ou y présente une surface frontale plane ou concave.

22. Elément de liaison selon l'une des revendications 15 à 21, **caractérisé en ce que** la matière synthétique thermoplastique est un polyamide, un polycarbonate, un polyestercarbonate, un acrylonitrile-butadiène-styrène, un styrène-acrylonitrile, un poly(méthacrylate de méthyle), un poly(chlorure de vinyle), un polyéthylène, un polypropylène ou un polystyrène.

23. Utilisation du procédé selon l'une des revendications 1 à 14 et d'un élément de liaison selon l'une des revendications 15 à 22 pour relier les pièces individuelles de cadres de fenêtre ou de jalousies en bois massif.

24. Utilisation du procédé selon l'une des revendications 1 à 14 et d'un élément de liaison selon l'une des revendications 15 à 22 pour fixer des ferrures sur des panneaux de fibres ou des éléments légers de construction.
